# EUROPEAN PATENT APPLICATION

(11) **EP 4 765 374 A1**
(43) Date of publication of application: **24.06.2026**
(21) Application number: 25774785.7
(22) Date of filing: 18.03.2025
(51) Int. Cl.: H01M 50/131, H01M 50/126, H01M 50/105, H01M 50/133, H01M 50/124, H01M 50/121, H01M 50/119, B32B 15/09, B32B 15/088, B32B 15/20

(54) **POUCH FILM LAMINATE, POUCH-TYPE BATTERY CASE, AND POUCH-TYPE SECONDARY BATTERY**

(30) Priority: 18.03.2024 KR 20240037462; 18.03.2024 KR 20240037463; 24.12.2024 KR 20240196382; 17.03.2025 KR 20250034241
(71) Applicant: LG Energy Solution, Ltd., Seoul 07335 (KR)
(72) Inventor: SHIN, Ji Hyun, Daejeon 34122 (KR); HWANG, Soo Ji, Daejeon 34122 (KR); LEE, Wan Soo, Daejeon 34122 (KR); YU, Hyung Kyun, Daejeon 34122 (KR); SONG, Dae Woong, Daejeon 34122 (KR); KIM, Gi Woung, Daejeon 34122 (KR)
(74) Representative: Plasseraud IP
(86) International application number: PCT/KR2025/003528
(87) International publication number: WO 2025/198313

(57) **Abstract**

A pouch film laminate according to the present invention is characterized in that it includes a base material layer, a gas barrier layer, and a sealant layer which are sequentially laminated, wherein the base material layer includes a drawing assistance film disposed on the gas barrier layer and a surface protection film disposed on the drawing assistance film, a ratio of machine direction (MD) tensile strength of the drawing assistance film to MD tensile strength of the surface protection film is in a range of 0.9 to 1.1, and a ratio of transverse direction (TD) tensile strength of the drawing assistance film to TD tensile strength of the surface protection film is in a range of 0.9 to 1.1.

## Description

### TECHNICAL FIELD

### Cross-reference to Related Applications

This application claims priority from Korean Patent Application Nos. 10-2024-0037462, filed on March 18, 2024, 10-2024-0037463, filed on March 18, 2024, 10-2024-0196382, filed on December 24, 2024, and 10-2025-0034241, filed on March 17, 2025, the disclosures of which are incorporated by reference herein.

### Technical Field

The present invention relates to a pouch film laminate, a pouch type battery case, and a secondary battery prepared by forming the pouch film laminate, and more particularly, to a pouch film laminate with improved formability by reducing a difference in mechanical properties between a surface protection film and a drawing assistance film, a pouch type battery case, and a secondary battery prepared by forming the pouch film laminate.

### BACKGROUND ART

Secondary batteries have been used not only in small products such as digital cameras, P-DVDs, MP3Ps, mobile phones, PDAs, portable game devices, power tools, and E-bikes, but also in large products requiring high output, such as electric vehicles and hybrid vehicles, and a power storage device and a power storage device for backup which store surplus generated power or renewable energy.

Typically, a secondary battery is prepared by a method in which electrode active material slurries are applied onto a positive electrode collector and a negative electrode collector to prepare a positive electrode and a negative electrode, respectively, the positive electrode and the negative electrode are stacked on both sides of a separator to form an electrode assembly having a predetermined shape, the electrode assembly is then accommodated in a battery case, and the battery case is sealed after injecting an electrolyte.

The secondary batteries are classified into a pouch type, a can type, and the like, according to a material of a case for accommodating the electrode assembly. The pouch type accommodates the electrode assembly in a pouch formed of a flexible polymer material. In addition, the can type accommodates the electrode assembly in a case formed of a material such as metal or plastic.

The pouch type battery case is prepared by press working of a flexible pouch film laminate to form a cup portion. Then, once the cup portion is formed, a secondary battery is prepared by accommodating the electrode assembly in an accommodation space of the cup portion and sealing a sealing portion.

Drawing in the press working is performed by inserting a pouch film into press equipment and applying pressure to the pouch film laminate with a punch to stretch the pouch film laminate. The pouch film laminate is generally composed of a plurality of layers in which a polymer film, such as polyethylene terephthalate, is laminated on one surface of a gas barrier layer formed of metal and a sealant layer is laminated on the other surface thereof.

Recently, a technique to improve energy density by increasing an amount of cell material per pouch is required as demand for high-capacity batteries, such as batteries for electric vehicles and energy storage system (ESS) batteries, increases. A technique has been developed to increase a thickness of aluminum of the gas barrier layer to increase formability and stiffness of the pouch, as a case, in response to the increased weight and amount of a cell, but it has a limitation, and overall, there has been a problem of decreased volumetric energy density.

### DISCLOSURE OF THE INVENTION

### TECHNICAL PROBLEM

An aspect of the present invention aims to provide a pouch film laminate capable of improving formability by changing physical properties of a surface protection film included in an outer layer of a pouch structure to be similar to those of a drawing assistance film, a pouch type battery case, and a pouch type secondary battery.

### TECHNICAL SOLUTION

[1] In an aspect, the present invention provides a pouch film laminate including a base material layer, a gas barrier layer, and a sealant layer which are sequentially laminated, wherein the base material layer includes a drawing assistance film disposed on the gas barrier layer and a surface protection film disposed on the drawing assistance film, a ratio of machine direction (MD) tensile strength of the drawing assistance film to MD tensile strength of the surface protection film is in a range of 0.9 to 1.1, and a ratio of transverse direction (TD) tensile strength of the drawing assistance film to TD tensile strength of the surface protection film is in a range of 0.9 to 1.1.
[2] In the pouch film laminate of [1] above, a ratio of MD elongation of the drawing assistance film to MD elongation of the surface protection film may be in a range of 0.9 to 1.1, and a ratio of TD elongation of the drawing assistance film to TD elongation of the surface protection film may be in a range of 0.9 to 1.1.
[3] In the pouch film laminate of [1] and/or [2] above, the MD tensile strength of the surface protection film may be in a range of 66 N/15 mm to 95 N/15 mm, and the MD tensile strength of the drawing assistance film may be in a range of 70 N/15 mm to 90 N/15 mm.
[4] In the pouch film laminate of at least one of [1] to [3] above, the TD tensile strength of the surface protection film may be in a range of 76 N/15 mm to 105 N/15 mm, and the TD tensile strength of the drawing assistance film may be in a range of 80 N/15 mm to 100 N/15 mm.
[5] In the pouch film laminate of at least one of [1] to [4] above, MD elongation of the surface protection film may be in a range of 105% to 137%, and MD elongation of the drawing assistance film may be in a range of 110% to 130%.
[6] In the pouch film laminate of at least one of [1] to [5] above, TD elongation of the surface protection film may be in a range of 114% to 147%, and TD elongation of the drawing assistance film may be in a range of 120% to 140%.
[7] In the pouch film laminate of at least one of [1] to [6] above, the surface protection film may have a thickness of 10 µm to 35 µm.
[8] In the pouch film laminate of at least one of [1] to [7] above, the drawing assistance film may have a thickness of 20 µm to 45 µm.
[9] In the pouch film laminate of at least one of [1] to [8] above, the base material layer may have a thickness of 40 µm to 70 µm.
[10] In the pouch film laminate of at least one of [1] to [9] above, the gas barrier layer may have a thickness of 70 µm to 90 µm.
[11] In the pouch film laminate of at least one of [1] to [10] above, the sealant layer may have a thickness of 70 µm to 90 µm.
[12] In the pouch film laminate of at least one of [1] to [11] above, the pouch film laminate may have a thickness of 100 µm to 300 µm.
[13] In the pouch film laminate of at least one of [1] to [12] above, a ratio of a thickness of the pouch film laminate to a thickness of the surface protection film may be in a range of 5 to 10.
[14] In the pouch film laminate of at least one of [1] to [13] above, a ratio of a thickness of the gas barrier layer to a thickness of the surface protection film may be in a range of 2.5 to 3.3.
[15] In the pouch film laminate of at least one of [1] to [14] above, a ratio of a thickness of the gas barrier layer to a thickness of the base material layer may be in a range of 1.4 to 1.8.
[16] In the pouch film laminate of at least one of [1] to [15] above, a ratio of a thickness of the drawing assistance film to a thickness of the surface protection film may be 1.2 or less.
[17] In the pouch film laminate of at least one of [1] to [16] above, the surface protection film may include at least one selected from the group consisting of polyethylene terephthalate, polyethylene, polypropylene, polycarbonate, polyvinyl chloride, acrylic polymer, polyacrylonitrile, polyimide, polyamide, cellulose, Nylon, polyester, polyparaphenylene benzobisoxazole, polyarylate, and Teflon.
[18] In the pouch film laminate of at least one of [1] to [17] above, the drawing assistance film may include at least one selected from the group consisting of Nylon 6, Nylon 6,6, Nylon MXD6(polyxylylene adipamide), Nylon 4, Nylon 4,6, and Nylon 4,10.
[19] In the pouch film laminate of at least one of [1] to [18] above, the gas barrier layer may include at least one selected from the group consisting of aluminum, copper, stainless steel, nickel, titanium, and INVAR.
[20] In the pouch film laminate of at least one of [1] to [19] above, the sealant layer may include at least one selected from the group consisting of polypropylene, polyethylene terephthalate, polyethylene, polycarbonate, polyvinyl chloride, acrylic polymer, polyacrylonitrile, polyimide, polyamide, cellulose, aramid, Nylon, polyester, polyparaphenylene benzobisoxazole, polyarylate, Teflon, and glass fibers.
[21] In the pouch film laminate of at least one of [1] to [20] above, the sealant layer may include a first sealant layer disposed to be in contact with the gas barrier layer, a second sealant layer laminated on the first sealant layer, and a third sealant layer laminated on the second sealant layer.
[22] In another aspect, the present invention provides a pouch type battery case which is prepared by drawing the pouch film laminate of at least one of [1] to [21] above.
[23] In another aspect, the present invention provides a pouch type secondary battery including the pouch type battery case of [22] above.

### ADVANTAGEOUS EFFECTS

A pouch film laminate according to the present invention is characterized by including a surface protection film having a tensile strength similar to that of a drawing assistance film, and in a case in which a pouch type battery case, in which a difference in mechanical properties between two layers disposed as an outermost surface thereof is small, is used as described above, since a pinhole or fracture due to the difference in physical properties of each layer is prevented to significantly improve formability, a sufficient forming depth may be secured.

### BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings.
FIG. 1 is a cross-sectional view of a pouch film laminate according to the present invention.
FIG. 2 is an exploded assembly view of a pouch type secondary battery according to the present invention.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may include plural forms unless referred to the contrary. It will be further understood that the terms "comprises" and/or "comprising" when used in this specification, specify the presence of stated components, but do not preclude the presence or addition of one or more other components.

In this specification, MD (Machine Direction) means a longitudinal direction of a drawing assistance film and a surface protection film, and TD (Transverse Direction) means a width direction of the drawing assistance film and the surface protection film.

MD tensile strength (N/15 mm) of the surface protection film and the drawing assistance film according to the present invention may be measured as strength at which fracture occurs while the surface protection film and the drawing assistance film each are cut to have a length (MD) x width (TD) of 130 mm x 15 mm, then fixed to a universal testing machine (UTM) with a grip gap of 50 mm, and pulled at a tensile speed of 5 mm/min, and MD elongation (%) of the surface protection film and the drawing assistance film may be calculated as a value that is obtained by dividing a grip gap at the time of fracture by the grip gap (50 mm) before drawing and then multiplying by 100.

TD tensile strength (N/15 mm) of the surface protection film and the drawing assistance film according to the present invention may be measured as strength at which fracture occurs while the surface protection film and the drawing assistance film each are cut to have a length (MD) x width (TD) of 15 mm x 130 mm, then fixed to a UTM with a grip gap of 50 mm, and pulled at a tensile speed of 5 mm/min, and TD elongation (%) of the surface protection film and the drawing assistance film may be calculated as a value that is obtained by dividing a grip gap at the time of fracture by the grip gap (50 mm) before drawing and then multiplying by 100.

Hereinafter, the present invention will be described in more detail.

A pouch film laminate according to the present invention includes at least one of configurations disclosed below, and may include any combination between technically possible configurations among the configurations below.

### <Pouch Film Laminate>

First, a pouch film laminate according to the present invention will be described.

A pouch film laminate 100 according to the present invention includes a base material layer 110, a gas barrier layer 120, and a sealant layer 130 which are sequentially laminated, wherein the base material layer 110 includes a drawing assistance film 114 disposed on the gas barrier layer 120 and a surface protection film 112 disposed on the drawing assistance film 114.

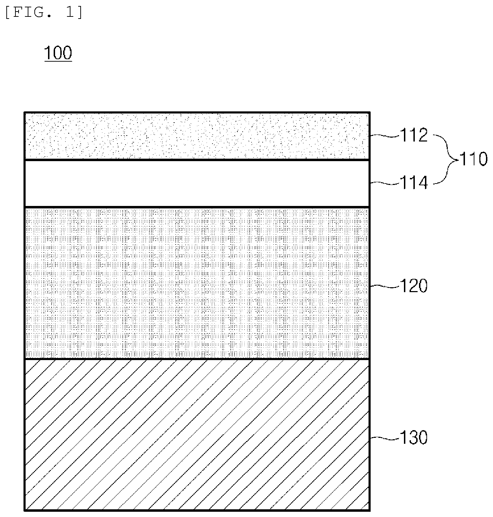

Hereinafter, each configuration of the pouch film laminate according to the present invention will be described in more detail with reference to FIG. 1.

### (1) Base Material Layer

The base material layer 110 according to the present invention is formed as an outermost layer of the pouch film laminate 100 to protect a secondary battery from friction and collision with the outside. The base material layer 110 is formed of a polymer such that it may electrically insulate an electrode assembly from the outside.

The base material layer 110 may include the surface protection film 112 and the drawing assistance film 114. In this case, the surface protection film 112 may be a layer disposed as the outermost layer of the pouch film laminate, and the drawing assistance film 114 may be a layer disposed between the surface protection film 112 and the gas barrier layer 120. The surface protection film 112 and the drawing assistance film 114 may be formed of materials with different materials and/or physical properties, respectively. An interface may exist between the surface protection film 112 and the drawing assistance film 114. This means that the surface protection film 112 and the drawing assistance film 114 are different layers from each other and may be formed separately.

The surface protection film 112 according to the present invention may be a layer disposed as the outermost layer of the pouch film laminate as described above. In this case, the surface protection film 112 is to protect a surface of a pouch from an external environment, wherein it may play a role in preventing moisture penetration from the outside.

The surface protection film 112 may be formed of at least one material selected from the group consisting of polyethylene terephthalate, polyethylene, polypropylene, polycarbonate, polyvinyl chloride, acrylic polymer, polyacrylonitrile, polyimide, polyamide, cellulose, aramid, Nylon, polyester, polyparaphenylene benzobisoxazole, polyarylate, Teflon, and glass fibers. Specifically, the surface protection film 112 may include at least one selected from the group consisting of polyethylene terephthalate, polybutylene terephthalate, and polyethylene naphthalate which have wear resistance and heat resistance, but is not limited thereto.

The surface protection film 112 may include an additive, if necessary. Physical properties of the surface protection film 112 may be changed by including the additive in the surface protection film 112. For example, as an additive to adjust tensile strength of the surface protection film 112, at least one of carbon fibers, glass fibers, and aramid fibers may be added.

The surface protection film 112 may have a thickness of 10 µm to 35 µm, preferably 20 µm to 30 µm, more preferably 22 µm to 28 µm, and even more preferably 24 µm to 26 µm. In a case in which the thickness of the surface protection film 112 satisfies the above range, since the surface protection film has a similar thickness to the drawing assistance film 114 according to the present invention, a difference in tensile strength is reduced to prevent occurrence of fracture due to a difference in physical properties between the two films, and thus, formability of the pouch may be improved and problems, such as film tearing or wrinkling during forming, may be prevented because durability is enhanced in a structure that requires deep forming under pressure.

The drawing assistance film 114 according to the present invention may be a layer disposed between the surface protection film 112 and the gas barrier layer 120 as described above. The drawing assistance film 114 has high elongation and thus, since it stretches but does not tear easily when deformation is applied, it plays a role in assisting drawing of the pouch film laminate by preventing easy fracture during a forming process of the pouch film laminate.

The drawing assistance film 114 may include a polyamide-based film. The drawing assistance film 114 may include at least one selected from the group consisting of Nylon 6, Nylon 6,6, Nylon MXD6(polyxylylene adipamide), Nylon 4, Nylon 4,6, and Nylon 4,10, but is not limited thereto. Specifically, in order for the drawing assistance film 114 to have a melting temperature of 240°C or higher, the drawing assistance film 114 may include Nylon 6,6 and/or Nylon MXD6.

The drawing assistance film 114 may have a thickness of 20 µm to 45 µm, preferably 20 µm to 30 µm, more preferably 22 µm to 28 µm, and even more preferably 24 µm to 26 µm. In a case in which the thickness of the drawing assistance film 114 satisfies the above numerical range, since the elongation is increased while securing tensile strength, it is balanced with formability of the gas barrier layer to prevent damage during drawing, and thus, the formability of the pouch may be ensured and a decrease in volumetric energy density of the secondary battery due to an excessive increase in the thickness of the pouch film laminate may be prevented.

A ratio of the thickness of the drawing assistance film 114 to the thickness of the surface protection film 112 may be 1.2 or less, may preferably be 1.2 or less, 1.1 or less, or 1.05 or less, and 0.5 or more, 0.6 or more, 0.7 or more, 0.8 or more, or 0.9 or more, and may more preferably be in a range of 0.9 to 1.05. In a case in which the above range is satisfied, the film is uniformly stretched because stress is not concentrated in a specific portion due to uniform distribution of tensile stress, and, since the formability is improved because delamination does not occur due to uniform adhesion between the two films, a high forming depth may be secured.

In the pouch film laminate 100 according to the present invention, a ratio of MD tensile strength of the drawing assistance film 114 to MD tensile strength of the surface protection film 112 is in a range of 0.9 to 1.1, and a ratio of TD tensile strength is in a range of 0.9 to 1.1. In a case in which the ratio of the MD and TD tensile strength of the drawing assistance film 114 to the surface protection film 112 satisfies the above range, since a difference in mechanical properties between the surface protection film 112 and the drawing assistance film 114 is reduced to prevent the occurrence of the fracture due to the difference in physical properties during forming of the pouch, there is an effect of improving the formability of the pouch.

The MD tensile strength ratio of the drawing assistance film 114 to the surface protection film 112 may specifically be in a range of 0.95 to 1.05, more specifically, 0.98 to 1.02, and the TD tensile strength ratio of the drawing assistance film 114 to the surface protection film 112 may specifically be in a range of 0.95 to 1.05, more specifically, 0.98 to 1.02.

Also, a MD elongation ratio of the drawing assistance film 114 to the surface protection film 112 is in a range of 0.9 to 1.1, and a TD elongation ratio may be in a range of 0.9 to 1.1. In a case in which the MD and TD elongation ratio of the drawing assistance film 114 to the surface protection film 112 satisfies the above range, since a difference in tensile properties between the laminated structural layers is reduced, both films are uniformly deformed during drawing, and thus, wrinkles due to excessive shrinkage or elongation may be prevented and stress concentration, which may occur at a film interface during forming, may be reduced to prevent layer delamination.

The MD elongation ratio of the drawing assistance film 114 to the surface protection film 112 may specifically be in a range of 0.95 to 1.05, more specifically, 0.98 to 1.02, and the TD elongation ratio of the drawing assistance film 114 to the surface protection film 112 may specifically be in a range of 0.95 to 1.05, more specifically, 0.98 to 1.02.

The MD tensile strength of the surface protection film 112 may be in a range of 66 N/15 mm to 95 N/15 mm, particularly 70 N/15 mm to 90 N/15 mm, and more particularly 76 N/15 mm to 84 N/15 mm, and the MD tensile strength of the drawing assistance film 114 may be in a range of 70 N/15 mm to 90 N/15 mm, particularly 72 N/15 mm to 88 N/15 mm, and more particularly 75 N/15 mm to 85 N/15 mm.

Also, the TD tensile strength of the surface protection film 112 may be in a range of 76 N/15 mm to 105 N/15 mm, particularly 81 N/15 mm to 100 N/15 mm, and more particularly 86 N/15 mm to 95 N/15 mm, and the TD tensile strength of the drawing assistance film 114 may be in a range of 80 N/15 mm to 100 N/15 mm, particularly 82 N/15 mm to 98 N/15 mm, and more particularly 85 N/15 mm to 95 N/15 mm.

In a case in which the tensile strengths in the MD and TD of the surface protection film 112 and the drawing assistance film 114 satisfy the above ranges, an effect of improving fatigue and puncture resistance after cup forming may be enhanced, and even if a tensile load of a certain level or higher is applied to the pouch for pouch forming, a problem, in which the pouch film laminate 100 is fractured or pinholes are generated, may be prevented.

The MD elongation of the surface protection film 112 may be in a range of 105% to 137%, particularly 110% to 130%, and more particularly 114% to 126%, and the MD elongation of the drawing assistance film 114 may be in a range of 110% to 130%, particularly 112% to 127%, and more particularly 115% to 125%.

The TD elongation of the surface protection film 112 may be in a range of 114% to 147%, particularly 120% to 140%, and more particularly 124% to 137%, and the TD elongation of the drawing assistance film 114 may be in a range of 120% to 140%, particularly 122% to 138%, and more particularly 125% to 135%.

In a case in which the elongations in the MD and TD of the surface protection film 112 and the drawing assistance film 114 satisfy the above ranges, since the gas barrier layer is well held, an effect of improving the formability may be obtained.

Since the MD and TD tensile strength and elongation of the surface protection film 112 and the drawing assistance film 114 vary depending on a type of the film, the thickness of the film, and/or a thickness of an adhesive layer, the surface protection film 112 and the drawing assistance film 114, which have desired tensile strength and elongation, may be formed by appropriately adjusting the type of the film, the thickness of the film, and/or the thickness of the adhesive layer.

According to an embodiment, the surface protection film 112 may be a polyethylene terephthalate film, and the drawing assistance film 114 may be a nylon film. In this case, it is desirable that the nylon film is disposed toward the gas barrier layer 120, i.e., on an inner side, and the polyethylene terephthalate film is disposed toward a surface of a battery case.

Since polyethylene terephthalate has excellent durability and electrical insulation properties, the durability and insulation properties are excellent when the polyethylene terephthalate film is disposed toward the surface. However, with respect to the polyethylene terephthalate film, since adhesion to an aluminum alloy thin film constituting the gas barrier layer 120 is weak and a stretching behavior is also different, when the polyethylene terephthalate film is disposed toward the gas barrier layer 120, delamination between the base material layer and the gas barrier layer 120 may occur during the forming process and a problem may occur in which the formability is reduced due to non-uniform stretching of the gas barrier layer 120. In contrast, since the nylon film has a similar stretching behavior to the aluminum alloy thin film constituting the gas barrier layer 120, an effect of improving the formability may be obtained when the nylon film is disposed between the polyethylene terephthalate and the gas barrier layer 120.

The base material layer 110 may have a composite layer structure which is formed by layering two or more materials, respectively. An adhesive layer may be additionally formed between the respective layers in the composite layer structure. The adhesive layer may be formed by applying an adhesive commonly used in the present invention, for example, a urethane-based adhesive. In this case, the adhesive layer may have a thickness of 1 µm to 8 µm, particularly 1 µm to 5 µm, and more particularly 2 µm to 4 µm. The base material layer 110 includes a surface protection film and a drawing assistance film, and may preferably further include an adhesive layer disposed between the surface protection film and the drawing assistance film. Specifically, the adhesive layer may be formed between the surface protection film 112 and the drawing assistance film 114, and for example, the base material layer 110 may have a structure in which the surface protection film/the adhesive layer/the drawing assistance film are sequentially laminated.

In this case, the base material layer 110 may have a thickness of 40 µm to 70 µm, particularly 45 µm to 60 µm, and more particularly 48 µm to 58 µm. When the thickness of the base material layer 110 satisfies the above range, durability, insulation properties, and formability are excellent. If the thickness of the base material layer 110 is excessively thin, the durability may be reduced and the base material layer may be damaged during the forming process, and, if the thickness is excessively thick, the formability may be reduced, a total thickness of the pouch film laminate may be increased, and a battery accommodation space may be reduced to decrease the energy density. In this case, the thickness of the base material layer 110 may be a thickness including the adhesive layer that may be included in the base material layer 110, and may be a thickness including an adhesive layer that adheres the gas barrier layer 120 and the base material layer 110. When the thickness of the base material layer 100 is a thickness including the adhesive layer in the base material layer 100 and the adhesive layer that adheres the gas barrier layer 120 and the base material layer 110 as described above, a clearer effect may be achieved.

### (2) Gas Barrier Layer

The gas barrier layer 120 according to the present invention is laminated between the base material layer 110 and the sealant layer 130 to secure mechanical strength of the pouch, block incoming and outgoing of gas or moisture from the outside of the secondary battery, and prevent leakage of an electrolyte from the inside of the pouch type battery case.

The gas barrier layer 120 may be formed of metal. For example, the gas barrier layer may be a metal thin film including at least one metal selected from the group consisting of aluminum (Al), copper (Cu), stainless steel (SUS), nickel (Ni), titanium (Ti), and INVAR, but is not limited thereto.

The gas barrier layer 120 may be formed of an aluminum alloy thin film. In a case in which the gas barrier layer 120 is formed by using the aluminum alloy thin film, the gas barrier layer 120 is light-weighted while securing more than a predetermined level of mechanical strength, may compensate for electrochemical properties by the electrode assembly and the electrolyte, and may secure a heat dissipation property. An element other than aluminum (Al) may be included in the aluminum alloy thin film. For example, at least one selected from the group consisting of iron (Fe), copper (Cu), chromium (Cr), manganese (Mn), nickel (Ni), magnesium (Mg), silicon (Si), and zinc (Zn) may be included in the aluminum alloy thin film.

Conventionally, it is common to form the gas barrier layer 120 to a thickness of 30 µm to 50 µm. However, in a case in which the thickness of the gas barrier layer is in a range of 30 µm to 50 µm, there was a limitation in increasing a depth of a cup portion or forming an outer wall of the cup portion close to vertical even if the pouch film laminate is drawn, and there was also a limitation in reducing a filleting radius of curvature of an edge of the cup portion. Also, since puncture strength was low, there was a problem in that the internal electrode assembly was easily damaged when a battery case received an impact from the outside.

Thus, in order to improve this problem in the present invention, the gas barrier layer 120 was formed to a thickness of 70 µm to 90 µm, particularly 75 µm to 85 µm, and more particularly 78 µm to 82 µm. In a case in which the thickness of the gas barrier layer satisfies the above range, since formability of the gas barrier layer is improved, the cup portion may be formed deep when the pouch film laminate is drawn and the radius of curvature of the edge of the cup portion may also be reduced. Accordingly, since a volume of the accommodation space is increased, more electrodes and separators may be stacked in the electrode assembly accommodated therein and energy efficiency to volume may be increased. However, in a case in which the thickness of the gas barrier layer is greater than 90 µm, since the thickness of the pouch film laminate may be excessively increased, the volumetric energy density of the secondary battery may be reduced.

A ratio of the thickness of the gas barrier layer to the thickness of the surface protection film may be in a range of 2.5 to 3.3. Preferably, the ratio may be 2.50 or more, 2.55 or more, 2.60 or more, 2.65 or more, 2.70 or more, 2.75 or more, 2.80 or more, 2.85 or more, 2.90 or more, 2.95 or more, or 3.00 or more, and may be 3.30 or less. More preferably, the ratio may be in a range of 3.00 to 3.30. In a case in which the above range is satisfied, since the thicknesses of the surface protection film and the gas barrier layer are balanced, a tensile force is uniformly distributed during the forming process to facilitate deformation, and thus, a high forming depth may be ensured.

A ratio of the thickness of the gas barrier layer to the thickness of the base material layer may be in a range of 1.4 to 1.8, specifically, 1.4 to 1.7. In a case in which the above range is satisfied, since cracks are prevented during forming, a high forming depth may be ensured.

### (3) Sealant Layer

The sealant layer 130 according to the present invention is for completely sealing the inside of the pouch type battery case by being thermally bonded to each other at a sealing portion when the pouch type battery case accommodating the electrode assembly inside is sealed. For this purpose, the sealant layer 130 may be formed of a material having excellent thermal bonding strength.

The sealant layer 130 may be formed of a material having insulation properties, corrosion resistance, and sealing properties. Specifically, since the sealant layer 130 is in direct contact with the electrode assembly and/or the electrolyte inside the pouch type battery case, it may be formed of a material having insulation properties and corrosion resistance. Also, since the sealant layer 130 completely seals the inside of the pouch type battery case to block material movement between the inside/the outside, it may be formed of a material having high sealing properties (e.g., excellent thermal bonding strength). To ensure such insulation properties, corrosion resistance, and sealing properties, the sealant layer 130 may be formed of a polymer material.

The sealant layer 130 may include at least one selected from the group consisting of polypropylene, polyethylene terephthalate, polyethylene, polycarbonate, polyvinyl chloride, acrylic polymer, polyacrylonitrile, polyimide, polyamide, cellulose, aramid, Nylon, polyester, polyparaphenylene benzobisoxazole, polyarylate, Teflon, and glass fibers, and may preferably include a polyolefin-based resin such as polypropylene and/or polyethylene. In this case, the polypropylene may be composed of cast polypropylene (CPP), acid modified polypropylene (PPa), a polypropylene-ethylene copolymer, and/or a polypropylene-butylene-ethylene terpolymer.

The sealant layer 130 may have a thickness of 70 µm to 90 µm, particularly 75 µm to 85 µm, and more particularly 78 µm to 82 µm. In a case in which the thickness of the sealant layer satisfies the above range, there is an effect of securing formability of the pouch film laminate while securing sealing strength of the sealing portion.

The sealant layer 130 may include a first sealant layer disposed to be in contact with the gas barrier layer, a second sealant layer laminated on the first sealant layer, and a third sealant layer laminated on the second sealant layer.

According to an embodiment of the present invention, the first sealant layer may include polypropylene, and preferably, in order to ensure long-term adhesion between the gas barrier layer and the first sealant layer, the first sealant layer may include acid modified polypropylene (PPa). Herein, the acid modified polypropylene may be maleic anhydride polypropylene (MAH PP).

According to an embodiment of the present invention, the second sealant layer may be formed of a material having insulation properties, corrosion resistance, and sealing properties. Preferably, the second sealant layer may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, Nylon, polyester, polyparaphenylene benzobisoxazole, polyarylate, Teflon, and glass fibers. Preferably, the second sealant layer may be formed of a polyolefin-based resin such as polypropylene (PP) and/or polyethylene (PE). In this case, the polypropylene may be composed of cast polypropylene, acid modified polypropylene, a polypropylene-ethylene copolymer, and/or a polypropylene-butylene-ethylene terpolymer. Herein, the acid modified polypropylene may be maleic anhydride polypropylene (MAH PP). More preferably, the second sealant layer may include cast polypropylene (CPP) having high tensile strength as well as heat sealability.

According to an embodiment of the present invention, the third sealant layer may include polypropylene, may preferably include a polypropylene random copolymer, may more preferably include at least one selected from the group consisting of an ethylene-propylene random copolymer and a butene-propylene random copolymer, and may even more preferably include an ethylene-propylene random copolymer. In a case in which the above conditions are satisfied, since a melt flow rate (MFR) is high and a melting point is low, a desired sealing thickness may be quickly achieved when the same amount of heat is applied. Accordingly, since sealing time may be reduced in comparison to a case where a polypropylene homocopolymer is included even if sealing temperature is not increased and processing time of the secondary battery may be reduced, productivity and processability may be improved, and simultaneously, since the third sealant layer has high thermal bonding strength, the pouch type battery case may have excellent sealing properties.

The pouch film laminate according to the present invention as described above may be prepared by a method of preparing a pouch film laminate which is known in the art. For example, the pouch film laminate of the present invention may be prepared by a method of attaching the base material layer 110 to an upper surface of the gas barrier layer 120 using an adhesive, and forming the sealant layer 130 on a lower surface of the gas barrier layer 120 by co-extrusion or an adhesive layer, but the present invention is not limited thereto.

The pouch film laminate may have a total thickness of 100 µm to 300 µm, particularly 160 µm to 250 µm, and more particularly 200 µm to 230 µm. When the thickness of the pouch film laminate satisfies the above range, a forming depth may be increased while minimizing a reduction of sealing durability or a decrease in battery accommodation space due to an increase in the thickness of the pouch laminate.

A ratio of the thickness of the pouch film laminate to the thickness of the surface protection film may be in a range of 5 to 10, may preferably be 6.0 or more, 6.5 or more, 7.5 or more, or 8.0 or more, and 10 or less, 9.5 or less, or 9.0 or less, and may more preferably be in a range of 8.0 to 9.0. In a case in which the above range is satisfied, since the ratio of the thickness of the pouch film laminate to the thickness of the surface protection film is appropriate, tensile deformation does not easily occur so that a phenomenon of occurrence of wrinkles during the forming process may be prevented, and accordingly, the forming depth may be increased and robustness may be excellent. Also, in a case in which the above conditions are satisfied, since most stretching occurs at an edge and/or corner as the edge and/or corner is a portion where stretching stress is concentrated during pouch forming, it is formed thinner than other portions and is vulnerable to external impacts, and thus, the robustness may be more excellent by preventing an excessive decrease in thickness of the edge and/or corner.

### <Pouch Type Secondary Battery>

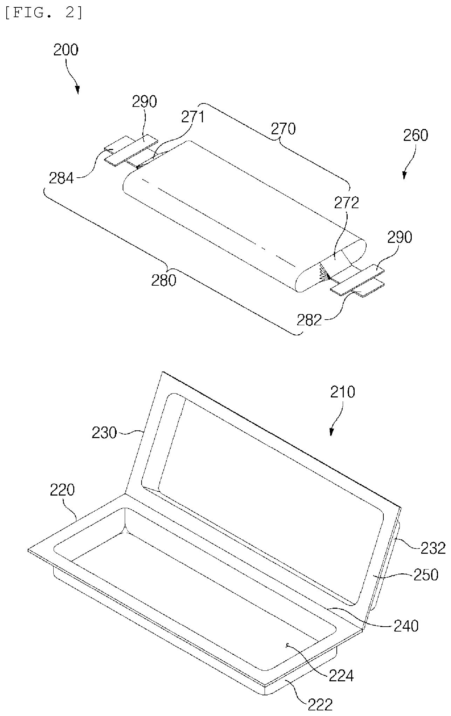

Next, a pouch type secondary battery according to the present invention will be described in more detail with reference to FIG. 2.

A pouch type secondary battery 200 according to the present invention includes a pouch type battery case 210 in which an electrode assembly is accommodated, the pouch type battery case 210 includes the pouch film laminate 100, and the pouch film laminate 100 includes the base material layer 110, the gas barrier layer 120, and the sealant layer 130 which are sequentially laminated, wherein the base material layer includes the surface protection film 112 and the drawing assistance film 114, and the drawing assistance film 114 is disposed between the surface protection film 112 and the gas barrier layer 120.

### (1) Pouch Type Battery Case

The pouch type battery case 210 according to the present invention may accommodate an electrode assembly 260 inside. The pouch type battery case 210 may be prepared by forming the above-described pouch film laminate of the present invention. Since detailed configuration and physical properties of the pouch film laminate are the same as described above, a detailed description is omitted.

The pouch film laminate may be drawn and stretched by a punch or the like to prepare the pouch type battery case 210. As a result, the pouch type battery case 210 may include a cup portion 222 and an accommodation portion 224. The accommodation portion 224 is a place to accommodate the electrode assembly, wherein it may mean an accommodation space which is formed in a pocket shape inside the cup portion 222 as the cup portion 222 is formed.

According to an embodiment of the present invention, the pouch type battery case 210 may include a first case 220 and a second case 230 as illustrated in FIG. 3. The first case 220 includes the accommodation portion 224 capable of accommodating the electrode assembly 260, and the second case 230 may cover the accommodation portion 224 from the top so that the electrode assembly 260 is not separated to the outside of the battery case 210. The first case 220 and the second case 230 may be prepared by connecting one sides thereof to each other as illustrated in FIG. 3, but the present invention is not limited thereto and the first case and the second case may be prepared in various ways, for example, the first case and the second case are separated from each other and prepared separately.

According to another embodiment of the present invention, in a case in which the cup portion is formed on the pouch film laminate, the two symmetrical cup portions 222 and 232 may be drawn adjacent to each other on one pouch film laminate. In this case, as illustrated in FIG. 3, the cup portions 222 and 232 may be formed in the first case 220 and the second case 230, respectively. After the electrode assembly 260 is accommodated in the accommodation portion 224 provided in the cup portion 222 of the first case 220, a bridge portion 240 formed between the two cup portions 222 and 232 may be folded so that the two cup portions 222 and 232 face each other. In this case, the cup portion 232 of the second case 230 may accommodate the electrode assembly 260 from above. Thus, since the two cup portions 222 and 232 accommodate the one electrode assembly 260, the electrode assembly 260 having a thickness greater than that when the cup portion 222 is one may be accommodated. Also, since one edge of the secondary battery 200 is formed by folding the pouch type battery case 210, the number of edges to be sealed may be reduced when a sealing process is performed later. Accordingly, a process speed of the pouch type secondary battery 200 may be improved, and the number of sealing processes may be reduced.

The pouch type battery case 210 may be sealed in a state in which it accommodates the electrode assembly 260 so that a portion of an electrode lead 280 to be described later, that is, a terminal portion, is exposed. Specifically, when the electrode lead 280 is connected to an electrode tab 270 of the electrode assembly 260 and an insulating portion 290 is formed in the portion of the electrode lead 280, the electrode assembly 260 is accommodated in the accommodation portion 224 provided in the cup portion 222 of the first case 220, and the second case 230 may cover the accommodation portion 224 from the top. Subsequently, an electrolyte is injected in the accommodation portion 224 and a sealing portion 250 formed on edges of the first case 220 and the second case 230 may be sealed.

The sealing portion 250 may act to seal the accommodation portion 224. Specifically, the sealing portion 250 may seal the accommodation portion 224 while being formed along an edge of the accommodation portion 224. Temperature at which the sealing portion 250 is sealed may be in a range of 180°C to 250°C, particularly 200°C to 250°C, and more particularly 210°C to 240°C. In a case in which the sealing temperature satisfies the above numerical range, the pouch type battery case 210 may secure sufficient sealing strength by thermal bonding.

### (2) Electrode Assembly

The electrode assembly 260 according to the present invention may be inserted into the pouch type battery case 210 and may be sealed by the pouch type battery case 210 after the injection of the electrolyte.

The electrode assembly 260 may be formed by sequentially stacking a positive electrode, a separator, and a negative electrode. Specifically, the electrode assembly 260 may include two types of electrodes, such as the positive electrode and the negative electrode, and the separator disposed between the electrodes to insulate the electrodes from each other.

The positive electrode and the negative electrode may be structures in which active material slurries are applied to electrode current collectors in the form of a metal foil or metal mesh including aluminum and copper, respectively. The slurry may be typically formed by stirring a granular active material, an auxiliary conductor, a binder, and a conductive agent in a state in which a solvent is added. The solvent may be removed in a subsequent process.

A slurry, in which an electrode active material, a binder, and/or a conductive agent are mixed, is applied to a positive electrode collector and a negative electrode collector to prepare a positive electrode and a negative electrode, and the electrode assembly 260 may be prepared in a predetermined shape by stacking the positive electrode and the negative electrode on both sides of the separator. Types of the electrode assembly 260 may include a stacked type, a jelly-roll-type, and a stack and folding type, but are not limited thereto.

The electrode assembly 260 may include the electrode tab 270.

The electrode tab 270 is connected to each of the positive electrode and the negative electrode of the electrode assembly 260 and protrudes from the electrode assembly 260 to the outside so that it may be a path through which electrons may move between the inside and the outside of the electrode assembly 260. The electrode current collector included in the electrode assembly 260 may be composed of a portion to which the electrode active material is applied and an end portion to which the electrode active material is not applied, that is, an uncoated portion. The electrode tab 270 may be formed by cutting the uncoated portion or may be formed by connecting a separate conductive member to the uncoated portion by ultrasonic welding or the like. As illustrated in FIG. 1, the electrode tabs 270 may protrude in different directions of the electrode assembly 260, respectively, but are not limited thereto and may be formed to protrude in various directions, for example, the electrode tabs protrude side by side from one side of the electrode assembly in the same direction.

### (3) Electrode Lead

The electrode lead 280 according to the present invention may supply electricity to the outside of the secondary battery 200. The electrode lead 280 may be connected to the electrode tab 270 of the electrode assembly 260 by spot welding or the like.

The electrode lead 280 is connected to the electrode assembly 260 and may protrude to the outside of the pouch type battery case 210 via the sealing portion 250. Specifically, one end of the electrode lead 280 is connected to the electrode assembly 260, especially the electrode tab 270, and the other end of the electrode lead 280 may protrude to the outside of the pouch type battery case 210.

The electrode lead 280 may include a positive electrode lead 282, which has one end connected to a positive electrode tab 272 and extends in a protruding direction of the positive electrode tab 272, and a negative electrode lead 284 which has one end connected to a negative electrode tab 271 and extends in a protruding direction of the negative electrode tab 271. The other ends of both of the positive electrode lead 282 and the negative electrode lead 284 may protrude to the outside of the battery case 210. Accordingly, the electricity generated inside the electrode assembly 260 may be supplied to the outside. Also, since the positive electrode tab 272 and the negative electrode tab 271 are formed to respectively protrude in various directions, the positive electrode lead 282 and the negative electrode lead 284 may also respectively extend in various directions. Materials of the positive electrode lead 282 and the negative electrode lead 284 may be different from each other. That is, the positive electrode lead 282 may be formed of an aluminum (Al) material that is the same as the positive electrode collector, and the negative electrode lead 284 may be formed of a copper (Cu) material or nickel (Ni)-coated copper material that is the same as the negative electrode collector. Since a portion of the electrode lead 280 protruding to the outside of the battery case 210 becomes a terminal portion, it may be electrically connected to an external terminal.

### (4) Insulating Portion

The insulating portion 290 according to the present invention prevents flow of the electricity generated from the electrode assembly 260 to the battery case 210 through the electrode lead 280, and may maintain sealing of the battery case 210. For this purpose, the insulating portion 290 may be formed of an insulator having non-conductivity which does not conduct electricity well. In general, as the insulating portion 290, an insulating tape or film, which is easy to be attached to the electrode lead 280 and is relatively thin, is widely used, but the present invention is not limited thereto and any member capable of insulating the electrode lead 280 may be used.

The insulating portion 290 may be disposed to surround an outer circumferential surface of the electrode lead 280. Specifically, at least a portion of the electrode lead 280 may be surrounded by the insulating portion 290. In this case, the insulating portion 290 may be disposed between the electrode lead 280 and the pouch type battery case 210. The insulating portion 290 may be limitedly located at the sealing portion 250 to which the first case 220 and the second case 230 of the pouch type battery case 210 are thermally fused, and may adhere the electrode lead 280 to the battery case 210.

### (5) Electrolyte

The pouch type secondary battery 200 according to the present invention may further include an electrolyte (not shown) that is injected into the pouch type battery case 210. The electrolyte according to the present invention is for moving lithium ions that are generated by an electrochemical reaction of the electrode during charge/discharge of the secondary battery 200, wherein it may include a non-aqueous organic electrolyte solution, as a mixture of a lithium salt and organic solvents, or a polymer using a polymer electrolyte. Furthermore, the electrolyte may include a sulfide-based, oxide-based, or polymer-based solid electrolyte, and the solid electrolyte may have flexibility to be easily deformed by an external force.

If pressure is applied due to the external force or gas generation, delamination may occur at an interface with relatively weak adhesion in the sealed battery case 210. For example, delamination may occur along an interface between the sealant layers thermally bonded to each other. However, with respect to the battery case prepared from the pouch film laminate of the present invention, since thermal bonding between the sealant layers with improved flow characteristics during melting is smoothly achieved, adhesion at the interface is maintained high, and thus, excellent sealing strength may be achieved.

Hereinafter, the present invention will be described in detail, according to specific examples. However, the following examples are merely presented to exemplify the present invention, and the scope of the present invention is not limited thereto. It will be apparent to those skilled in the art that various modifications and alterations are possible within the scope and technical spirit of the present invention. Such modifications and alterations fall within the scope of claims included herein.

### Example 1

After a urethane adhesive was applied to a thickness of 3 µm between a 25 µm thick nylon film and a 25 µm thick polyethylene terephthalate film to form a 3 µm thick first adhesive layer, thermal lamination was performed to form a base material layer. In this case, films having tensile strength and elongation as described in Table 1 and Table 2 below were used as the nylon film and the polyethylene terephthalate film.

Thereafter, a urethane adhesive was applied to one surface of an 80 µm thick aluminum alloy, as a gas barrier layer, to form a 3 µm thick second adhesive layer, and the above-prepared base material layer was laminated on the second adhesive layer and then subjected to thermal lamination.

Next, a 30 µm thick first sealant layer including acid modified polypropylene (PPa), a 30 µm thick second sealant layer including cast polypropylene (PP), and a 20 µm thick third sealant layer including an ethylene-propylene random copolymer were co-extruded on another surface of the gas barrier layer to prepare a pouch film laminate in which surface protection film/the first adhesive layer/drawing assistance film/the second adhesive layer/the gas barrier layer/the first sealant layer/the second sealant layer/the third sealant layer were sequentially laminated.

### Examples 2 to 4 and Comparative Examples 1 to 3

Pouch film laminates of Examples 2 to 4 and Comparative Examples 1 to 3 were prepared in the same manner as in Example 1 except that films having tensile strengths and elongations in MD and TD as shown in Tables 1 and 2 below were used as nylon films and polyethylene terephthalate films, respectively.

### Comparative Example 4

A pouch film laminate was prepared in the same manner as in Example 1 except that the surface protection film had a thickness of 12 µm and the gas barrier layer had a thickness of 60 µm.

### Comparative Example 5

A pouch film laminate, in which surface protection film/first adhesive layer/drawing assistance film/second adhesive layer/gas barrier layer/first sealant layer/third sealant layer were sequentially laminated, was prepared in the same manner as in Example 1 except that the surface protection film had a thickness of 12 µm, the drawing assistance film had a thickness of 15 µm, thicknesses of the gas barrier layer, the first sealant layer, and the third sealant layer were 40 µm, and a second sealant layer was not included.

**[Table 1]**

| | MD tensile strength [N/15 mm] | | Tensile strength ratio | TD tensile strength [N/15 mm] | | Tensile strength ratio |
|---|---|---|---|---|---|---|
| | Nylon film | PET film | | Nylon film | PET film | |
| Example 1 | 82 | 78 | 1.05 | 93 | 89 | 1.04 |
| Example 2 | 76 | 80 | 0.95 | 82 | 84 | 0.98 |
| Example 3 | 88 | 83 | 1.04 | 95 | 90 | 1.05 |
| Example 4 | 90 | 95 | 0.95 | 99 | 104 | 0.95 |
| Comparative Example 1 | 75 | 89 | 0.84 | 87 | 85 | 1.02 |
| Comparative Example 2 | 83 | 81 | 1.02 | 92 | 72 | 1.27 |
| Comparative Example 3 | 82 | 100 | 0.82 | 90 | 106 | 0.85 |
| Comparative Example 4 | 68 | 46 | 1. 47 | 79 | 40 | 1. 97 |
| Comparative Example 5 | 82 | 44 | 1.86 | 93 | 37 | 2.51 |

**[Table 2]**

| | MD elongation [%] | | Elongat ion ratio | TD elongation [%] | | Elongation ratio |
|---|---|---|---|---|---|---|
| | Nylon film | PET film | | Nylon film | PET film | |
| Example 1 | 120 | 114 | 1.05 | 131 | 126 | 1.04 |
| Example 2 | 112 | 116 | 0.96 | 125 | 129 | 0.97 |
| Example 3 | 128 | 122 | 1. 05 | 133 | 129 | 1.03 |
| Example 4 | 130 | 125 | 1. 04 | 138 | 142 | 0.97 |
| Comparative Example 1 | 120 | 136 | 0.88 | 125 | 128 | 0.98 |
| Comparative Example 2 | 125 | 117 | 1.05 | 136 | 114 | 1.19 |
| Comparative Example 3 | 102 | 138 | 0.74 | 99 | 126 | 0.79 |
| Comparative Example 4 | 112 | 70 | 1. 60 | 101 | 69 | 1.46 |
| Comparative Example 5 | 130 | 77 | 1.68 | 124 | 64 | 1.93 |

### Experimental Example: Evaluation of Maximum Forming Depth

A maximum forming depth of each of the pouch film laminates prepared in Examples 1 to 4 and Comparative Examples 1 to 5 was measured.

Specifically, when the pouch film laminate was cut to 266 mm in width and 200 mm in length and then cold-formed to form a cup portion of 90 mm in width and 160 mm in length, a forming depth immediately before the pouch film laminate was fractured was defined as the maximum forming depth (unit: mm). After fifteen of each of the pouch film laminates of Examples 1 to 4 and Comparative Examples 1 to 5 were prepared and the maximum forming depth measurement experiment was performed 15 times, an average value of the maximum forming depths is presented in Table 3 below.

**[Table 3]**

| | Average value of maximum forming depths [mm] |
|---|---|
| Example 1 | 13.5 |
| Example 2 | 13.0 |
| Example 3 | 13.0 |
| Example 4 | 13.0 |
| Comparative Example 1 | 12.5 |
| Comparative Example 2 | 13.0 |
| Comparative Example 3 | 11.0 |
| Comparative Example 4 | 7.5 |
| Comparative Example 5 | 9.0 |

According to Table 3, with respect to Examples 1 to 4 in which a ratio of the MD direction tensile strength or TD direction tensile strength of the nylon film to that of the PET film was in a range of 0.9 to 1.1, forming depths were greater than those of Comparative Examples 1 to 5, and accordingly, it may be confirmed that formability of the pouch film laminates prepared in Examples 1 to 4 was better than that of Comparative Examples 1 to 5.

### [Description of the Symbols]

100: Pouch Film Laminate
110: Base Material Layer
112: Surface Protection Film
114: Drawing Assistance Film
120: Gas Barrier Layer
130: Sealant Layer
200: Pouch Type Secondary Battery
210: Pouch Type Case
220: First Case
222: Cup Portion
224: Accommodation Portion
230: Second Case
232: Cup Portion
240: Bridge Portion
250: Sealing Portion
260: Electrode Assembly
270: Electrode Tab
271: Negative Electrode Tab
272: Positive Electrode Tab
280: Electrode Lead
282: Positive Electrode Lead
284: Negative Electrode Lead
290: Insulating Portion

## Claims

1. A pouch film laminate comprising:
a base material layer, a gas barrier layer, and a sealant layer which are sequentially laminated,
wherein the base material layer comprises a drawing assistance film disposed on the gas barrier layer and a surface protection film disposed on the drawing assistance film,
a ratio of machine direction (MD) tensile strength of the drawing assistance film to MD tensile strength of the surface protection film is in a range of 0.9 to 1.1, and
a ratio of transverse direction (TD) tensile strength of the drawing assistance film to TD tensile strength of the surface protection film is in a range of 0.9 to 1.1.

2. The pouch film laminate of claim 1, wherein a ratio of MD elongation of the drawing assistance film to MD elongation of the surface protection film is in a range of 0.9 to 1.1, and
a ratio of TD elongation of the drawing assistance film to TD elongation of the surface protection film is in a range of 0.9 to 1.1.

3. The pouch film laminate of claim 1, wherein the MD tensile strength of the surface protection film is in a range of 66 N/15 mm to 95 N/15 mm, and
the MD tensile strength of the drawing assistance film is in a range of 70 N/15 mm to 90 N/15 mm.

4. The pouch film laminate of claim 1, wherein the TD tensile strength of the surface protection film is in a range of 76 N/15 mm to 105 N/15 mm, and
the TD tensile strength of the drawing assistance film is in a range of 80 N/15 mm to 100 N/15 mm.

5. The pouch film laminate of claim 1, wherein MD elongation of the surface protection film is in a range of 105% to 137%, and
MD elongation of the drawing assistance film is in a range of 110% to 130%.

6. The pouch film laminate of claim 1, wherein TD elongation of the surface protection film is in a range of 114% to 147%, and
TD elongation of the drawing assistance film is in a range of 120% to 140%.

7. The pouch film laminate of claim 1, wherein the surface protection film has a thickness of 10 µm to 35 µm.

8. The pouch film laminate of claim 1, wherein the drawing assistance film has a thickness of 20 µm to 45 µm.

9. The pouch film laminate of claim 1, wherein the base material layer has a thickness of 40 µm to 70 µm.

10. The pouch film laminate of claim 1, wherein the gas barrier layer has a thickness of 70 µm to 90 µm.

11. The pouch film laminate of claim 1, wherein the sealant layer has a thickness of 70 µm to 90 µm.

12. The pouch film laminate of claim 1, wherein the pouch film laminate has a thickness of 100 µm to 300 µm.

13. The pouch film laminate of claim 1, wherein a ratio of a thickness of the pouch film laminate to a thickness of the surface protection film is in a range of 5 to 10.

14. The pouch film laminate of claim 1, wherein a ratio of a thickness of the gas barrier layer to a thickness of the surface protection film is in a range of 2.5 to 3.3.

15. The pouch film laminate of claim 1, wherein a ratio of a thickness of the gas barrier layer to a thickness of the base material layer is in a range of 1.4 to 1.8.

16. The pouch film laminate of claim 1, wherein a ratio of a thickness of the drawing assistance film to a thickness of the surface protection film is 1.2 or less.

17. The pouch film laminate of claim 1, wherein the surface protection film comprises at least one selected from the group consisting of polyethylene terephthalate, polyethylene, polypropylene, polycarbonate, polyvinyl chloride, acrylic polymer, polyacrylonitrile, polyimide, polyamide, cellulose, Nylon, polyester, polyparaphenylene benzobisoxazole, polyarylate, Teflon, and glass fibers.

18. The pouch film laminate of claim 1, wherein the drawing assistance film comprises at least one selected from the group consisting of Nylon 6, Nylon 6,6, Nylon MXD6(polyxylylene adipamide), Nylon 4, Nylon 4,6, and Nylon 4,10.

19. The pouch film laminate of claim 1, wherein the gas barrier layer comprises at least one selected from the group consisting of aluminum, copper, stainless steel, nickel, titanium, and INVAR.

20. The pouch film laminate of claim 1, wherein the sealant layer comprises at least one selected from the group consisting of polypropylene, polyethylene terephthalate, polyethylene, polycarbonate, polyvinyl chloride, acrylic polymer, polyacrylonitrile, polyimide, polyamide, cellulose, aramid, Nylon, polyester, polyparaphenylene benzobisoxazole, polyarylate, Teflon, and glass fibers.

21. The pouch film laminate of claim 1, wherein the sealant layer comprises a first sealant layer disposed to be in contact with the gas barrier layer, a second sealant layer laminated on the first sealant layer, and a third sealant layer laminated on the second sealant layer.

22. A pouch type battery case prepared by drawing the pouch film laminate of claim 1.

23. A pouch type secondary battery comprising the pouch type battery case of claim 22.
